# EUROPEAN PATENT APPLICATION

(11) **EP 2 945 011 A1**
(43) Date of publication of application: **18.11.2015**
(21) Application number: 13870580.1
(22) Date of filing: 24.05.2013
(51) Int. Cl.: G02C 11/00

(54) **GLASSES WITH CALL FUNCTION**

(30) Priority: 10.01.2013 CN 201310008983
(71) Applicant: Jing, Yanjie, Shenzhen, Guangdong 518023 (CN)
(72) Inventor: Jing, Yanjie, Shenzhen, Guangdong 518023 (CN)
(74) Representative: Krauns, Christian
(86) International application number: PCT/CN2013/076227
(87) International publication number: WO 2014/107943

(57) **Abstract**

The present invention relates to the technical field of glasses and discloses glasses with a call function, where the glasses include a temple, a holding groove is disposed on the temple, the holding groove has an opening connecting to a side of the temple, a swinging block that is placed in the holding groove and can be moved out of the opening of the holding groove is movably connected in the holding groove, and a sound element configured for a call is disposed in the swinging block. Compared with the prior art, in glasses in the present invention, when a call function needs to be used, a swinging block can be moved out of a holding groove to expose outside a temple, and a sound element in the swinging block is used to perform a call operation; and when a call function is not needed, the swinging block is placed in the holding groove to prevent a problem that the glasses is relatively big in dimension and heavy in weight. In addition, a user is not required to place any element in an ear and is relatively comfortable when using the glasses, and an impact caused by radiation during a call to health is greatly reduced. In particular, for a user frequently drives, using these glasses can significantly improve driving safety.

## Description

### TECHNICAL FIELD

The present invention relates to the technical field of glasses, and in particular, to a glass with a call function.

### BACKGROUND

Currently, a sound device of glasses with a call function in the market is mainly classified into two types: bone conduction and earphones. Call effects are implemented by installing a bone conduction component or plugging in earphones into the glasses. Both the bone conduction component and the earphones have defects in big size and heavy weight. In addition, the existence of the bone conduction component or the earphones affects the appearance of glasses. The bone conduction component largely increase a size of the glasses and when the earphones are plugged into implement call effects, the earphones need to be placed into ears during a call, causing discomfort to the ears and making the glasses entirely unsuitable for common daily use as glasses wearing.

In addition, there are also some glasses configured with a common Bluetooth earphone in the market. Because the Bluetooth earphone also needs to be placed into an ear to fix and receive sound, the Bluetooth earphone also causes discomfort to the ear. In addition, when Bluetooth earphone is standby, the Bluetooth earphone also needs to be worn in the ear, and therefore further increases the discomfort feeling caused because the earphone is placed into the ear for a long time and has problems such as radiation and an impact on driving security.

### SUMMARY

An objective of the present invention is to provide glasses with a call function, aiming to solve a problem in the prior art that glasses with a call function is big in dimension, heavy in weight, and causes discomfort when in use.

The present invention is implemented as follows: Glasses with a call function include a temple, a holding groove is disposed on the temple, the holding groove has an opening connecting to a side of the temple, a swinging block that is placed in the holding groove and can be moved out of the opening of the holding groove is movably connected in the holding groove, and a sound element configured for a call is disposed in the swinging block.

Compared with the prior art, in glasses in the present invention, when a call function needs to be used, a swinging block can be moved out of a holding groove to expose outside a temple, and a sound element in the swinging block is used to perform a call operation; and when a call function is not needed, the swinging block is placed in the holding groove to prevent a problem that the glasses is relatively big in dimension and heavy in weight. In addition, a user is not required to place any element in an ear and is relatively comfortable when using the glasses, and an impact caused by radiation during a call to health is greatly reduced. In particular, for a user frequently drives, using these glasses can significantly improve driving safety.

### BRIEF DESCRIPTION OF THE DRAWINGS

FIG. 1 is a schematic three-dimensional diagram of glasses with a call function according to an embodiment of the present invention; and
FIG. 2 is a schematic three-dimensional exploded diagram of glasses with a call function according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention. The following describes implementation of the present invention in detail with reference to specific accompanying drawings.

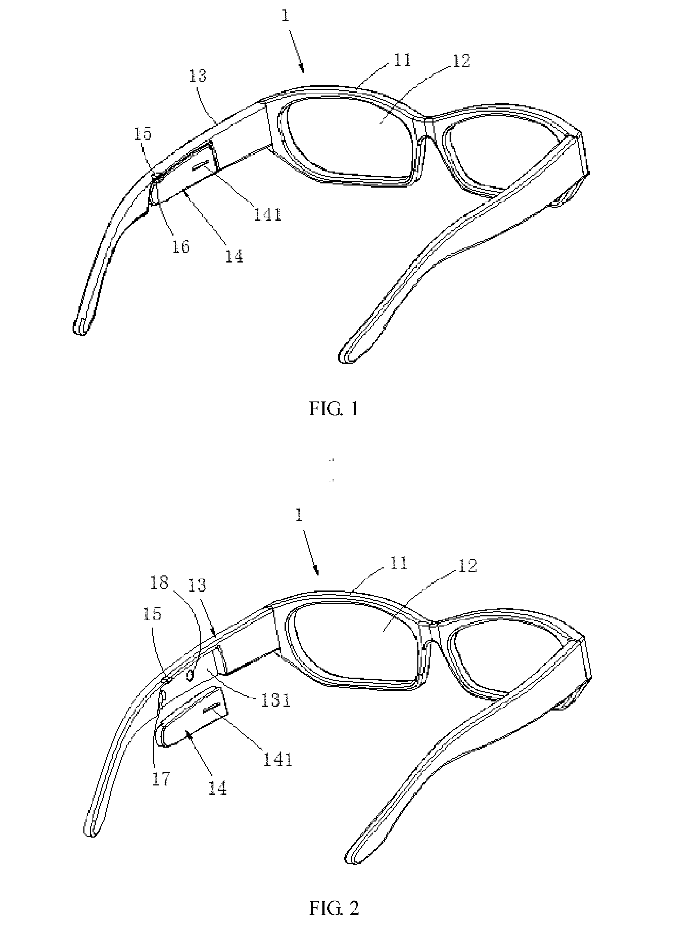

FIG. 1 and FIG. 2 shows an exemplary embodiment provided in the present invention.

Glasses 1 provided in this embodiment include a glass frame 11 and a temple 13. The glass frame 11 and the temple 13 are both common structures. Two lenses 12 are configured in the glass frame 11. The temple 11 is separately connected on two sides of the glass frame 11. The temple 13 can rotate relative to the glass frame 11. Certainly, a connection relationship between the temple 13 and the glass frame 11 may be determined based on actual situations but not limited to the structures in this embodiment.

A holding groove 131 is arranged on the foregoing temple 13. The holding groove 131 has an opening connecting to a side wall of the temple 13 and a swinging block 14 is movably connected in the holding groove 131, where a sound element is disposed in the swinging block 14, and the swinging block 14 may be placed in the holding groove 131 or may be moved out of the holding groove 131 to expose outside the temple 13.

In this way, in the foregoing glasses 1, when a user does not need to use a call function of the glasses 1, the swinging block 14 can be directly placed in the holding groove 131 and when the call function of the glasses 1 needs to be used, the swinging block 14 can be moved out of the holding groove 131 to expose outside the temple 13, and the sound element in the swinging block 14 is used to perform a call operation. No framework for bone conduction, no earphones or Bluetooth earphones need to be configured on the glasses 1. The swinging block 14 can be built in the glasses 13. The swinging block 14 is relatively small in size and is only used for functioning as fastening the sound element. Therefore, a problem that the glasses 1 are relative big in dimension and heavy in weight is prevented, a user is not required to place any element in an ear and is relatively comfortable when using the glasses, and an impact caused by radiation during a call to health is greatly reduced. In particular, for a user frequently drives, using these glasses 1 does not affect driving safety.

In this embodiment, an end of the swinging block 14 is connected on a bottom part of the holding groove 131 by rotating a pin shaft 17. In this way, by directly rotating the swinging block 14, the swinging block 14 can be directly moved out of the holding groove 131 or the swinging block 14 can be directly moved to the holding groove 131.

Specifically, the foregoing holding groove 131 is arranged on an interior surface of the temple 13. Certainly, the opening of the holding groove 131 may be connected to an upper side wall or a lower side wall of the temple 13. In this embodiment, the opening of the holding groove 131 is connected to the lower side wall of the temple 13.

A sound output hole 141 is further disposed on the swinging block 14. The sound output hole 141 is connected to the sound element to transmit a sound transmitted from the sound element to the outside for a user to receive and listen to.

Certainly, to enable the swinging block 14 to be rapidly moved out of the holding groove 131 when the swinging block 14 is rotated, in this embodiment, a repulsion component is arranged between the swinging block 14 and the holding groove 131. The repulsion component can generate repulsion on the swinging block 14 towards the opening of the holding groove 131.

Specifically, the foregoing repulsion component includes a first magnetic block 15 arranged on an interior wall of the holding groove 131 and a second magnetic block 16 arranged on the swinging block 14, and magnetism of the first magnetic block 15 and the second magnetic block 16 is the same. Therefore, repulsive repulsion exists between the first magnetic block 15 and the second magnetic block 16 and the repulsion is towards the opening of the holding groove 131 to force the swinging block 14 to swing outwards.

When the swinging block 14 is placed in the holding groove 131, to stabilize the swinging block 14 in position and prevent from receiving an effect of the foregoing repulsion component, because it is difficult to fasten the swinging element in the holding groove 131, an attraction component is disposed between the swinging block 14 and the holding groove 131. The attraction component can generate attraction towards an interior side of the holding groove 131, so that the swinging block 14 is stably placed in the holding groove 131.

Specifically, the foregoing attraction component includes a third magnetic block arranged on the bottom part of the holding groove 131 and a fourth magnetic block arranged on the swinging element, and magnetism of the third magnetic block is different from magnetism of the fourth magnetic block. In this way, attraction is generated between the third magnetic block and the fourth magnetic block. The attraction is towards the interior side of the holding groove 131, so that the swinging block 14 is stably placed in the holding groove 131.

In this embodiment, to make the swinging block 14 stably placed in the holding groove 131, the foregoing third magnetic block protrudes from the holding groove 131 and correspondingly, a groove matching the third magnetic block is disposed on an interior surface of the swinging block 14. In this way, when the swinging block 14 is placed in the holding groove 131, the third magnetic block is placed in the groove to implement fastening.

Certainly, the fourth magnetic block may also protrude from an interior surface of the swinging block 14 and a groove 18 is arranged on the bottom part of the holding groove 131. Fastening and matching between the fourth magnetic block and the groove 18 is used to make the swinging block 14 stably located in the holding groove 131.

Certainly, the foregoing groove may also separately arranged on the bottom part of the holding groove 131 and an interior surface of the swinging block 14. Correspondingly, the third magnetic block protrudes from the holding groove 131 and at the same time, the fourth magnetic block protrudes from the interior surface of the swinging block 14.

Setting situations of the foregoing third magnetic block, the foregoing fourth magnetic block, and the foregoing groove may be determined based on actual situations.

In this embodiment, along a direction extending from an end of the swinging block 14 to the other end, that is, a direction extending from a terminal connecting the swinging block 14 and the pin shaft 17 to the other end, a distance between the repulsion component and the pin shaft 17 is less than a distance between the attraction component and the pin shaft 17. In this way, torque of the attraction generated by the attraction component relative to the pin shaft 17 is greater than torque of the repulsion generated by the repulsion component relative to the pin shaft 17. Therefore, only relatively little attraction is required to make the swinging block 14 stably placed in the holding groove 131.

When a user rotates the swinging block 14 towards the outside of the opening of the holding groove 131, separating force of the attraction component is quicker than separating force of the repulsion component. At this time, the attraction generated by the attraction component sharply decreases and the repulsion generated by the repulsion component decreases relatively slower, and torque of the repulsion relative to the pin shaft 17 is greater than torque of the attraction relative to the pin shaft 17. In this way, under an effect of the torque generated by the repulsion, the swinging element is rapidly swung out of the holding groove 131. When the user rotates the swinging block 14 towards the inside of the holding groove 131, under a push effect of the user, when the swinging block 14 is rotated to a certain position, torque of the attraction relative to the pin shaft 17 is greater than torque of the repulsion relative to the pin shaft 17. Under an effect of attraction, the swinging block 14 is quickly attracted to the inside of the holding groove 131 and stably placed in the holding groove 131.

The foregoing descriptions are merely exemplary embodiments of the present invention, but are not intended to limit the present invention. Any modification, equivalent replacement, or improvement made without departing from the spirit and principle of the present invention shall fall within the protection scope of the present invention.

## Claims

1. Glasses with a call function, comprising a temple, wherein: a holding groove is disposed on the temple, the holding groove has an opening connecting to a side of the temple, a swinging block that is placed in the holding groove and can be moved out of the opening of the holding groove is movably connected in the holding groove, and a sound element configured for a call is disposed in the swinging block.

2. The glasses with a call function according to claim 1, wherein the holding groove is disposed on an interior wall of the temple.

3. The glasses with a call function according to claim 1 or 2, an end of the swinging block is connected on a bottom part of the holding groove by rotating a pin shaft and the other end is empty.

4. The glasses with a call function according to claim 3, wherein a repulsion component that generates repulsion on the swinging block towards the opening of the holding groove is disposed between the swinging block and the holding groove.

5. The glasses with a call function according to claim 4, wherein the repulsion component comprises a first magnetic block disposed on an interior wall of the holding groove and a second magnetic block disposed on the swinging block, and magnetism of the first magnetic block is the same as magnetism of the second magnetic block.

6. The glasses with a call function according to claim 3, wherein an attraction component that generates attraction on the swinging block towards the holding groove is disposed between the swinging block and the holding groove.

7. The glasses with a call function according to claim 6, wherein the attraction component comprises a third magnetic block disposed on the bottom part of the holding groove and a fourth magnetic block disposed on the swinging block, and magnetism of the third magnetic block is different from magnetism of the fourth magnetic block.

8. The glasses with a call function according to claim 7, wherein the third magnetic block protrudes from the bottom part of the holding groove and a groove matching the third magnetic block is disposed on an interior surface of the swinging block.

9. The glasses with a call function according to claim 7, wherein the fourth magnetic block protrudes from an interior surface of the swinging block and a groove matching the fourth magnetic block is disposed on the bottom part of the holding groove.

10. The glasses with a call function according to claim 6, wherein along a direction extending from an end of the swinging block to the other end, a distance between the repulsion component and the pin shaft is less than a distance between the attraction component and the pin shaft.
